# EUROPÄISCHE PATENTSCHRIFT

(11) **EP 0 963 234 B1**
(45) Veröffentlichungstag und Bekanntmachung des Hinweises auf die Patenterteilung: **10.11.2004**
(21) Anmeldenummer: 97943864.5
(22) Anmeldetag: 18.09.1997
(51) Int. Cl.: B01D 46/24

(54) **LUFTFILTER, INSBESONDERE ANSAUGLUFTFILTER FÜR EINE BRENNKRAFTMASCHINE**
AIR FILTER, SPECIALLY AN AIR INTAKE FILTER FOR AN INTERNAL COMBUSTION ENGINE
FILTRE A AIR, NOTAMMENT FILTRE A AIR D'ADMISSION POUR MOTEUR A COMBUSTION INTERNE

(30) Priorität: 21.09.1996 DE 19638791
(43) Veröffentlichungstag der Anmeldung: 15.12.1999
(73) Patentinhaber: Mann + Hummel GmbH, 71638 Ludwigsburg (DE)
(72) Erfinder: SCHNABEL, Werner, D-74747 Ravenstein (DE); SIEBELS, Karl-Heinz, D-70327 Stuttgart (DE)
(74) Vertreter: Voth, Gerhard, Dipl.-Ing.
(86) Internationale Anmeldenummer: PCT/EP1997/005115
(87) Internationale Veröffentlichungsnummer: WO 1998/011977

(56) Entgegenhaltungen:
- DE-A- 4 318 215
- DE-U- 8 805 049
- GB-A- 1 535 789

## Beschreibung

Die Erfindung betrifft einen Luftfilter, insbesondere Ansaugluftfilter für eine Brennkraftmaschine nach dem Oberbegriff des Hauptanspruchs. Ein solches Luftfilter ist beispielsweise aus dem DE-GM 88 05 049 bekannt und wird in Kraftfahrzeugen eingesetzt. Das Luftfilter besteht aus einem Filterpapierkörper, der einen Stütz- und Dichtring aufweist. Dieser ist üblicherweise aus einer Materialkombination von Metallblech und Gummi bzw. Kunststoff. Der Ring übernimmt dabei die Stützfunktion für den Filterpapierkörper und gleichzeitig eine Dichtfunktion. Bei dem bekannten Gegenstand wird Dichtfunktion und Stützfunktion getrennt, d.h. die Stützfunktion wird über eine konzentrische Ringfläche erfüllt, während die Dichtfunktion von einer Dichtlippe übernommen wird.

Ein Nachteil des bekannten Systems besteht darin, daß aufgrund des Schmutzes, der sich im Bereich der Dichtung anlagert, die Dichtwirkung verlorengehen kann. Dies führt dazu, daß ungehindert Rohluft in den Reinluftbereich eindringt und die Filterwirkung erheblich mindert.

Aus der DE 43 18 215 A1 ist ein Filterelement mit einem ringförmig, radial wirkenden Dichtung bekannt. Bei diesem Filterelement ist zusätzlich zu dem Dichtelement eine Ringfeder vorgesehen, die einen höheren radialen Anpressdruck erzielen soll. Ein Nachteil bei diesem System liegt darin, dass ein zusätzliches Bauteil erforderlich ist, welches die Betriebssicherheit unter Umständen negativ beeinflußt.

Aus der GB 15 35 789 ist ein Einbaufilter bekannt, welches radial bzw. axial abgedichtet wird. Zur Verstärkung der Dichtungswirkung werden dort ebenfalls Verstärkungsringe eingefügt, die einen zusätzlichen Montageschritt bzw. einen zusätzlichen Arbeitsgang im Herstellungsprozeß erfordern.

Der Erfindung liegt die Aufgabe zugrunde, die genannten Nachteile zu vermeiden und ein Luftfilter zu schaffen, welches ein Dichtsystem aufweist, das auch bei hohem Schmutzanfall und über die gesamte Lebenszeit des Systems den Reinluftbereich zuverlässig von dem Rohluftbereich abtrennt.

Diese Aufgabe wird, ausgehend von dem Oberbegriff des Hauptanspruches, durch dessen kennzeichnende Merkmale gelöst. Der wesentliche Vorteil der Erfindung liegt darin, daß eine besonders ausgestattete Vordichtung vorgesehen ist. welche ein Eindringen von Staub und Schmutz in den Dichtbereich wirksam verhindert. Diese Vordichtung ist eine Dichtlippe, die an einem Dichtring angeordnet ist und an einer zusätzlichen Dichtrippe des Gehäuses anliegt. Selbstverständlich besteht auch die Möglichkeit, eine Schaumstoffdichtung oder eine Flächendichtung zu verwenden. In dem Fall muß gewährleistet sein, daß auch bei beliebigen Einbaulagen kein Schmutz in den Dichtbereich eindringen kann.

Gemäß der Erfindung wird vorgesehen, den Dichtring mit einer Einführschrägen zu versehen und als Radialdichtung an dem Filterkörper auszubilden.

Eine Weiterbildung der Erfindung sieht vor, den Dichtring mit einem Befestigungsbereich zu versehen. Dieser Befestigungsbereich läßt eine besonders einfache Montage desselben an dem Filterkörper zu. Beispielsweise erfolgt die Befestigung mittels einer Bördelverbindung.

In einer weiteren Ausgestaltung der Erfindung ist die Dichtrippe an einer stimseitigen Fläche des Gehäuses angeordnet. Dies ist besonders dann vorteilhaft, wenn der Filterkörper stehend im Gehäuse, d.h. mit vertikaler Achse, angeordnet ist. Gerade hier besteht die Gefahr, daß Schmutz aufgrund der Schwerkraft sich an dem Dichtbereich anlagert. Die Dichtrippe verhindert in

Verbindung mit der Dichtlippe wirksam das Eindringen von Schmutz in den Bereich des Reinluftstutzens und damit in den dichtungsrelevanten Bereich.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand eines Ausführungsbeispieles näher erläutert.

Es zeigen:
- Figur 1: ein Luftfilter im Längsschnitt
- Figur 2: eine Detaildarstellung eines Dichtringes.

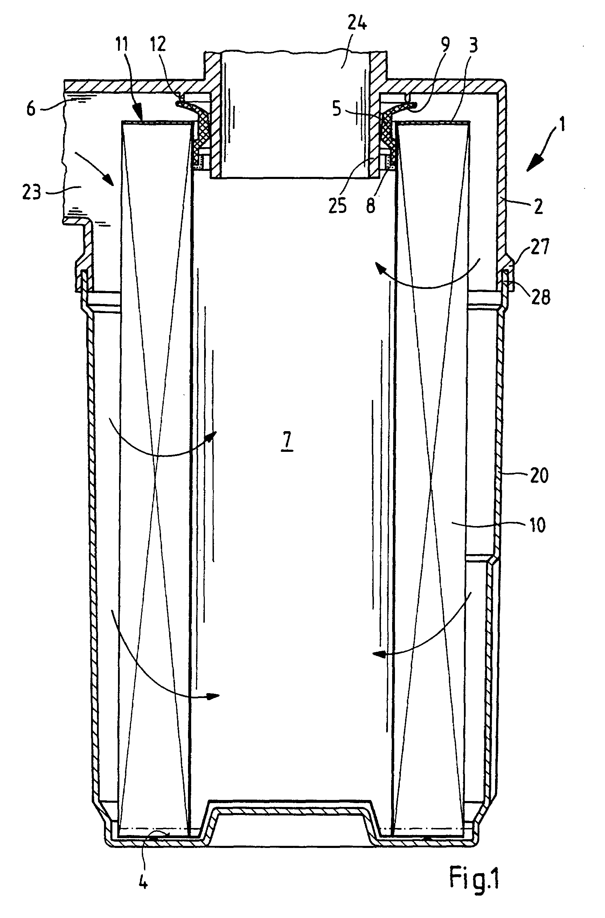

Das in Figur 1 gezeigte Ausführungsbeispiel des Luftfilters 1 besteht aus einem Luftfiltergehäuse 2 mit einem Rohlufteinlaß 23 an seiner linken Seite und einem zentralen Reinluftauslaß 24 im oberen Bereich. Der Auslaß 24 hat die Form eines Rohrstutzens 25, dessen Querschnitt rund ist. Den unteren Teil des Luftfiltergehäuses 2 bildet ein becherförmiger Deckelkörper 20, der mit seinem oberen Rand in eine passende umlaufende Nut 28 im Gehäuserand 27 des Luftfiltergehäuses 2 eingesetzt ist. Im Inneren des Luftfiltergehäuses 2 ist ein Filterkörper 10 angeordnet, der als auswechselbarer Einsatz ausgebildet ist. An seiner in der Figur oberen Stirnseite 11 ist der Filterkörper 10 mit einer Endscheibe 3 versehen.

Auch auf der gegenüberliegenden Seite ist eine Endscheibe 4 angeordnet. Diese schließt den Filterkörper 10 auf der gesamten Stimfläche ab. An dem Filterkörper 10 ist ein Dichtring 5 befestigt. Dieser Dichtring 5 liegt in radialer Richtung an dem Rohrstutzen 25 an und trennt damit den Rohluftraum 6 von dem Reinluftraum 7. Der Dichtring 5 ist an der Innenwandung des Filterkörpers 10 im Bereich 8 angebördelt. Der Dichtring weist eine umlaufende Dichtlippe 9 auf. Diese liegt an einer Dichtrippe 12 des Gehäuses 2 an. Sofern sich in dem Rohluftraum 6 Staub und Schmutz befindet, ist die Verbindung von Dichtlippe und Dichtrippe ein wirksamer Abschluß, der das Eindringen dieses Staubes oder Schmutzes in den Bereich der Dichtflächen von Rohrstutzen 25 und Dichtring 5 wirksam verhindern. Durch die nach unten gerichtete Dichtrippe ist ferner gewährleistet, daß sich an dieser keine Schmutzablagerungen bilden können. Beim Austausch des Filterkörpers 10 fällt der evtl. an dem Luftfiltergehäuse angelagerte Schmutz nach unten und kann problemlos entfernt werden. Beim Einsetzen eines neuen Filterkörpers 10 ist gewährleistet, daß sich auf der Dichtfläche des Luftfiltergehäuses kein Schmutz befindet.

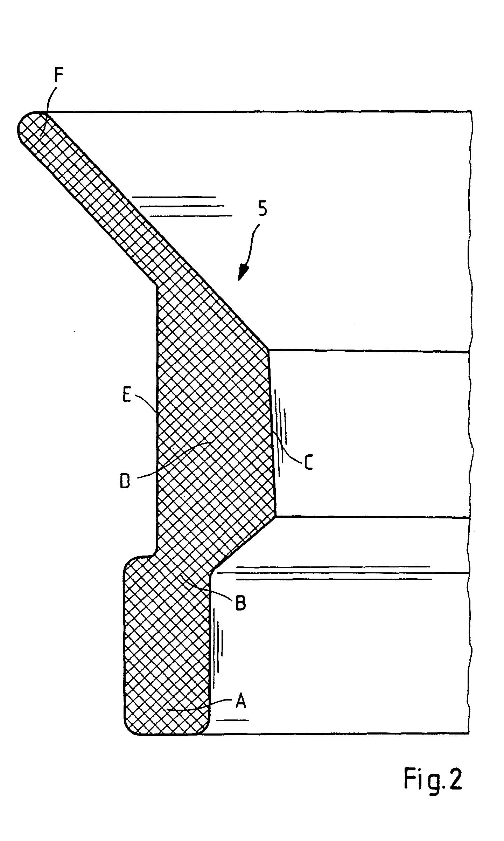

Figur 2 zeigt in einer Detaildarstellung den Filterkörper 5. Im Bereich A weist dieser einen Einbördelrand auf. Im Bereich B befindet sich der federnde Abschnitt des Dichtringes. Der Bereich C ist ein leicht geneigter Ansatz, der das Aufschieben des Filterkörpers 10 auf den Rohrstutzen 25 vereinfacht. Im Bereich D befindet sich der die Dichtspannung erzeugende Umfang. Die Oberfläche E ist mit einem Hinterschnitt versehen, um eine Elastizität über einen weiten Toleranzbereich zu gewährleisten. Im Bereich F ist die Dichtlippe angeordnet, die die Einführschräge C fortsetzt. Diese Lippe wird, wie in Figur 1 dargestellt, gegen die Dichtrippe angelegt und bildet somit eine Vordichtung, so daß kein Staub oder Schmutz in den Bereich der Dichtung bzw. der Einführschräge C gelangen kann.

## Patentansprüche

1. Luftfilter, insbesondere Ansaugluftfilter für eine Brennkraftmaschine mit einem insbesondere aus einer zickzackförmig gefalteten Filterpapierbahn bestehenden hohlzylindrischen Filterkörper (10), der an wenigstens einer Stirnseite mit einem Dichtring (5) versehen ist, mit welchem der Filterkörper als Einsatz in einem Luftfiltergehäuse fixierbar ist und welche die Rohluftseite von der Reinluftseite trennt,
wobei der Dichtring (5) eine Dichtlippe (9) aufweist, **dadurch gekennzeichnet daß** der Dichtring (5) mit einer Einführschräge versehen ist und radialdichtend auf einem Rohrstutzen (25) des Gehäuses (2) angeordnet ist und
wobei die Dichtlippe an einer Dichtrippe (12) des Gehäuses (2) anliegt und bildet somit eine Vordichtung, die ein Eindringen von Staub oder Schmutz in den Dichtbereich verhindert.

2. Luftfilter nach Anspruch 1, **dadurch gekennzeichnet, daß** der Dichtring (5) einen Befestigungsbereich (8) aufweist und dieser Befestigungsbereich sich im zylinderförmigen Hohlraum des Filterkörpers (10) befindet.

3. Luftfilter nach Anspruch 1 oder 2, **dadurch gekennzeichnet, daß** der Dichtring (5) mittels einer Bördelverbindung mit dem Filterkörper (10) verbunden ist.

4. Luftfilter nach Anspruch 1, 2 oder 3, **dadurch gekennzeichnet, daß** die Dichtrippe (12) an einer stirnseitigen Fläche des Gehäuses (2) angeordnet ist.

## Claims

1. Air filter, more especially an intake air filter for an internal combustion engine, said air filter having a hollow cylindrical filter body (10), which consists more especially of a filter paper sheet folded in a zigzag shape and which is provided on at least one end face with a sealing ring (5), with which the filter body is securable as an insert in an air filter housing and which separates the unfiltered air side from the filtered air side, wherein the sealing ring (5) includes a sealing lip (9),
**characterised in that**
- the sealing ring (5) is provided with a lead-in inclination and is disposed in a radially sealing manner on a pipe connector piece (25) and
- wherein the sealing lip abuts a sealing rib (12) of the housing (2) and consequently forms a preliminary seal which prevents an ingress of dust or dirt into the sealing region.

2. Air filter according to claim 1, **characterised in that** the sealing ring (5) includes a securing region (8) and this securing region is situated in the cylindrical cavity of the filter body (10).

3. Air filter according to claim 1 or 2, **characterised in that** the sealing ring (5) is connected to the filter body (10) by means of a jointed-flange connection.

4. Air filter according to claim 1, 2 or 3, **characterised in that** sealing rib (12) is disposed on an end surface of the housing (2).

## Revendications

1. Filtre à air, notamment filtre à air d'admission pour un moteur à combustion interne, comprenant un corps de filtre (10) cylindrique creux réalisé à partir d'une bande de papier filtrant pliée en zigzag et qui, du moins sur une face frontale, est muni d'un joint d'étanchéité (5), qui permet de fixer le corps de filtre sous la forme d'un insert dans un boîtier de filtre à air, séparant le côté air brut du côté air propre, le joint d'étanchéité (5) présentant une lèvre d'étanchéité (9),
**caractérisé en ce que**
le joint d'étanchéité (5) est muni d'une rampe d'introduction et disposé sur une tubulure (25) du boîtier (2) pour le rendre étanche radialement, et la lèvre d'étanchéité épouse une nervure d'étanchéité (12) du boîtier (2) et forme ainsi une pré-étanchéité qui évite l'introduction de poussières ou de salissures dans la zone d'étanchéité.

2. Filtre à air selon la revendication 1,
**caractérisé en ce que**
le joint d'étanchéité (5) présente une zone de fixation (8) qui se trouve dans l'espace creux cylindrique du corps de filtre (10).

3. Filtre à air selon la revendication 1 ou 2,
**caractérisé en ce que**
le joint d'étanchéité (5) est relié au corps de filtre (10) par sertissage.

4. Filtre à air selon la revendication 1, 2 ou 3,
**caractérisé en ce que**
la nervure d'étanchéité (12) est disposée sur une surface côté frontal du boîtier (2).
